(19)

Europäisches
Patentamt
European
Patent Office
Office européen
des brevets

(11) **EP 4 570 137 B1**

(12) **EUROPEAN PATENT SPECIFICATION**

(45) Date of publication and mention
of the grant of the patent:
**05.11.2025  Bulletin 2025/45**

(21) Application number: **24166999.3**

(22) Date of filing: **27.03.2024**

(51) International Patent Classification (IPC):
*A47J 27/08* *(2006.01)*    *A47J 27/092* *(2006.01)*

(52) Cooperative Patent Classification (CPC):
**A47J 27/0802; A47J 27/092**

(54) **POT LID ASSEMBLY AND PRESSURE COOKING APPLIANCE**

TOPFDECKELANORDNUNG UND DRUCKKOCHGERÄT

ENSEMBLE COUVERCLE DE RÉCIPIENT ET APPAREIL DE CUISSON SOUS PRESSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **14.12.2023   CN 202323423765 U**

(43) Date of publication of application:
**18.06.2025   Bulletin 2025/25**

(73) Proprietor: **Foshan Shunde Midea Electrical
Heating Appliances
Manufacturing Co., Ltd.
Foshan, Guangdong 528311 (CN)**

(72) Inventors:
• YANG, Zhong
  Foshan  528311 (CN)
• YANG, Xianglong
  Foshan  528311 (CN)

(74) Representative: **RGTH
Patentanwälte PartGmbB
Neuer Wall 10
20354 Hamburg (DE)**

(56) References cited:
WO-A1-2009/005182    CN-A- 110 960 067
CN-B- 110 786 743

## Description

### TECHNICAL FIELD

The disclosure relates to the technical field of cooking apparatus, and in particular to a pot lid assembly and a pressure cooking appliance.

### BACKGROUND

In the related art, a pot lid of a pressure cooking appliance is usually equipped with a float. When a cooking cavity is pressurized, the float rises and protrudes from the pot lid to prompt a user of a state of pressure in the cooking cavity. However, in an actual application, there is a higher risk that the float protruding from the pot lid might be accidentally touched. If the float is pressed down by an external force, the cooking cavity is easily caconfigured to release pressure, which not only affects a normal progress of a cooking process, but also easily leads to safety accidents such as a scalding of users, thereby limiting an improvement of user experience. WO 2009/005 182 A1 discloses a pressure-control and airtight device for a pressure cooker.

### SUMMARY

The disclosure aims to solve at least one of the technical problems existing in the prior art or related technologies.
To this end, a pot lid assembly according to claim 1 is provided.
A second aspect of the present invention concerns a pressure cooking appliance according to claim 10.
According to the present invention, the pot lid assembly includes:
a lid body portion configured to cover or open a pot mouth, wherein the lid body portion is provided with a mounting hole; a float portion penetrating and movably arranged in the mounting hole, and having a fitting end and a free end, the fitting end being configured to open or close an end of the mounting hole, the free end being arranged close to another end of the mounting hole, the float portion having a stretchable structure, such that a distance between the free end and the fitting end is adjustable; and a limit portion disposed in the mounting hole, in which the fitting end and the free end are respectively located on two sides of the limit portion along a direction, along which the mounting hole 1101 is opened, and in which the limit portion is configured to limit the distance between the free end and the fitting end.
In a feasible embodiment, a minimum distance between a side of the limit portion facing toward the free end and the fitting end is a first distance; the float portion is provided with a first positioning member, the first positioning member being configured to abut the side of the limit portion facing toward the free end; and in a case that the float portion is in an extreme compression state, a distance between the first positioning member and the fitting end is a second distance, the first distance being greater than the second distance.
According to the invention, the float portion includes: a base seat disposed on the lid body portion and located at an end of the mounting hole, wherein the base seat is provided a fitting hole being in communication with the mounting hole; a float body penetrating and movably arranged in the fitting hole; a sealing member, sleeved on an end of the float body and configured to cover or open the fitting hole; and an elastic stretchable member connected to another end of the float body and penetrating and movably arranged in the mounting hole; in which, the fitting end is formed on the sealing member, and the free end is located at an end of the elastic stretchable member away from the float body.
In a feasible embodiment, two ends of the elastic stretchable member are respectively located on two sides of the limit portion along the opening direction of the mounting hole, the limit portion being configured to limit a distance between the two ends of the elastic stretchable member.
In a feasible embodiment, the float portion further includes: a float ejector rod connected to the elastic stretchable member, wherein the float ejector rod is provided the free end; and a first positioning member, disposed on the float ejector rod and configured to abut the side of the limit portion facing toward the free end; in which, in a case that the first positioning member abuts against the side of the limit portion facing toward the free end, a gap is formed between the float ejector rod and the float body.
In a feasible embodiment, the float portion further includes: a second positioning portion disposed on the float ejector rod and configured to abut a side of the limit portion facing toward the fitting end, the elastic stretchable member being located between the second positioning member and the float body; in which, along the opening direction of the mounting hole, a distance between the first positioning member and the second positioning member is greater than a distance between the two sides of the limit portion.
In a feasible embodiment, an end of the float ejector rod close to the float body penetrates and is arranged in the elastic stretchable member.
In a feasible embodiment, a stiffness coefficient of the elastic stretchable member satisfies:

$$k \leq \frac{p_{min} \cdot A - G_0 - G_1 - G_2}{x_{max}}$$

in which, k is the stiffness coefficient of the elastic stretchable member; $p_{min}$ is a minimum working pressure of the pressure cooking appliance; A is an area of orthographic projection of the sealing member in a projection plane perpendicular to the direction of gravity; $G_0$ is a weight of the elastic stretchable member; $G_1$ is a weight of the float body; $G_2$ is a weight of the sealing member; $x_{max}$ is a maximum amount of expansion and retraction of the elastic stretchable member.

In a feasible embodiment, the elastic stretchable member is made of silicone; or the elastic stretchable member is a spring or an elastic piece.

In a feasible embodiment, the pot lid assembly further includes: a handle portion disposed on the lid body portion.

According to a second aspect of the present invention, a pressure cooking appliance is provided, including: a pot body assembly formed with a pot mouth; and the pot lid assembly according to any of the claims 1 to 9, configured to open or cover the pot mouth.

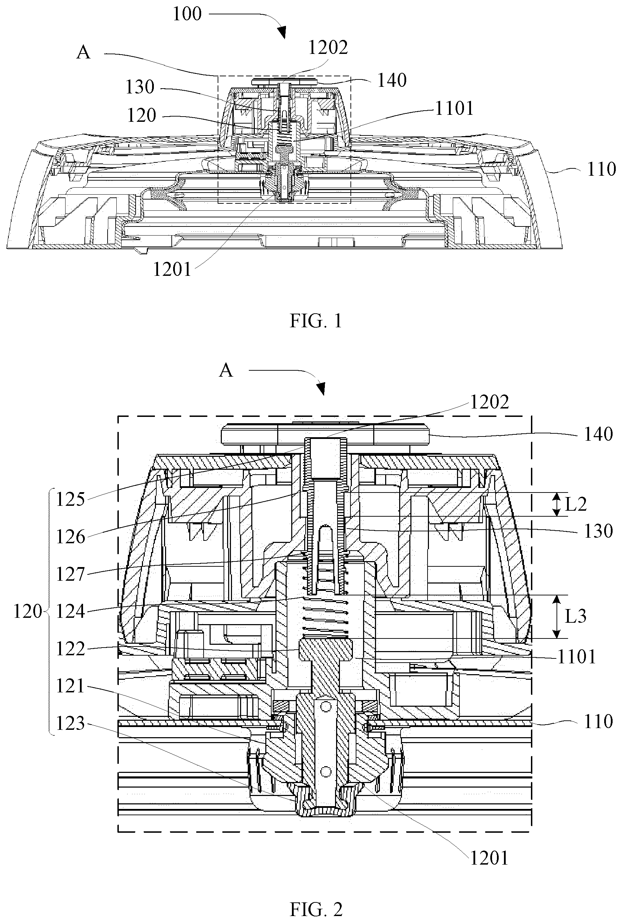

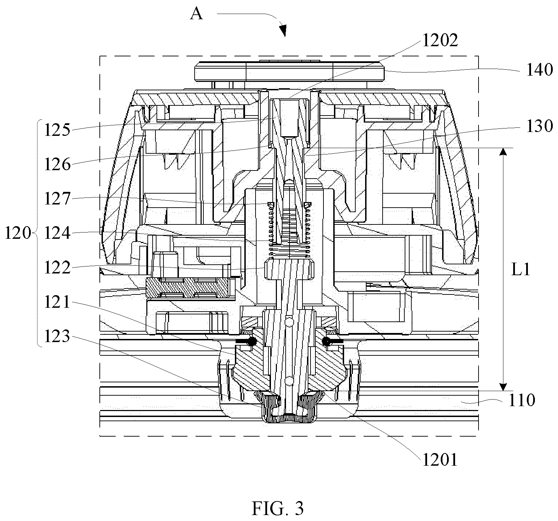

Compared with the prior art, the disclosure at least includes the following beneficial effects: the pot lid assembly according to the embodiment of the disclosure includes a lid body portion, a float portion and a limit portion. In practical applications, the pot lid assembly according to the embodiments of the disclosure may be disposed on a pot body assembly of a pressure cooking appliance or used as a component of the pressure cooking appliance. In some embodiments, the lid body portion may be configured to cover a pot mouth of the pot body assembly to enclose a cooking cavity with the pot body assembly; as shown in FIG. 2, during a pressure cooking process, a pressure in the cooking cavity can act on the float portion, and the float portion will move along the mounting hole of the lid body portion accordingly so that the fitting end of the float portion contacts the lid body portion and cuts off an end of the mounting hole accordingly, and therefore the cooking cavity is prevented from being in communication with an external environment through the mounting hole to ensure a pressure in the cooking cavity to be stable, and the free end of the float portion may protrude from another end of the mounting hole to prompt a user of a state of pressure in the cooking cavity. As shown in FIG. 3, in the above situation, if the free end of the float portion is subjected to an external force and generates a tendency of movement of retracting into the mounting hole, then the float portion can use, through a way of compression deformation, its own compression deformation to offset a displacement of the free end. At the same time, based on the arrangement of the limit portion, a distance between the free end and the fitting end can also be avoided from being too small, and the free end and the fitting end can be prevented from contacting with each other due to the compression deformation, and therefore a position of the fitting end is prevented from being changed, and the mounting hole is prevented from being turned on during a pressure cooking process, and which is conducive to ensuring a stability of an internal pressure of the cooking cavity and at the same time reducing a probability of a relasing of a high-temperature medium in the cooking cavity to the outside via the mounting hole, and in turn reducing a risk of scalding user, and therefore a safety of the pressure cooking process is improved, which is conducive to improving a user experience of a product.

BRIEF DESCRIPTION OF DRAWINGS

Various other advantages and benefits will become apparent to those skilled in the art by reading the following detailed description of the exemplary embodiments. The accompanying drawings are for the purpose of illustrating exemplary embodiments only. Throughout the accompanying drawings, the same reference signs are configured to designate the same components. In the accompanying drawings:

FIG. 1 is a schematic structural diagram of a pot lid assembly according to an embodiment of the disclosure;
FIG. 2 is a schematic enlarged view of a region indicated by A of the pot lid assembly shown in FIG. 1 in a first state;
FIG. 3 is a schematic enlarged view of the region indicated by A of the pot lid assembly shown in FIG. 1 in a second state;
FIG. 4 is a schematic enlarged view of the region indicated by A of the pot lid assembly shown in FIG. 1 in a third state; and
FIG. 5 is a schematic exploded structural diagram of a pressure cooking appliance according to an embodiment of the disclosure.

In the accompanying drawings, corresponding relationships between reference signs and component names in FIG. 1 to FIG. 5 are as follows:

100 pot lid assembly; 200 pot body assembly;
110 lid body portion; 120 float portion; 130 limit portion; 140 handle portion; 150 sealing portion;
210 first pot body; 220 second pot body;
121 base seat; 122 float body; 123 sealing member;
124 elastic stretchable member; 125 float ejector rod; 126 first positioning member; 127 second positioning member;
1101 mounting hole;
1201 fitting end; 1202 free end.

DESCRIPTION OF EMBODIMENTS

Exemplary embodiments of the disclosure will be described in more detail below with reference to the accompanying drawings. Although the exemplary embodiments of the disclosure are shown in the accompanying drawings, it should be understood that the disclosure may be implemented in various forms and should not be limited to the embodiments set forth herein. Rather, these embodiments are provided in order to provide a thorough understanding of the disclosure, and to fully convey the scope of the disclosure to those skilled in the art.

As shown in FIG. 1 to FIG. 5, a pot lid assembly 100 is proposed according to a first aspect of an embodiment of the disclosure, which may include: a lid body portion 110 for covering or opening a pot mouth, the lid body portion 110 being opened with a mounting hole 1101; a float portion 120 penetrating and movably arranged in the mounting hole 1101 and having a fitting end 1201 and a free end 1202, the fitting end 1201 being configured to open or close an end of the mounting hole 1101, the free end 1202 being arranged close to another end of the mounting hole 1101, the float portion having a stretchable structure such that a distance between the free end 1202 and the fitting end 1201 is adjustable; and a limit portion 130 disposed in the mounting hole 1101, the fitting end 1201 and the free end 1202 being located respectively on two sides of the limit portion 130 along a direction, in which the mounting hole 1101 is opened, the limit portion 130 being configured to limit the distance between the free end 1202 and the fitting end 1201.

The pot lid assembly 100 according to some embodiments of the disclosure includes the lid body portion 110, the float portion 120 and the limit portion 130. In some embodiments, the lid body portion 110 is opened with the mounting hole 1101, and the mounting hole 1101 can provide a space for mounting the float portion 120 and the limit portion 130. Correspondingly, the float portion 120 penetrates and is movably arranged in the mounting hole 1101 and has a stretchable structure, so that the float portion 120 on the one hand can adjust positions of the fitting end 1201 and the free end 1202 by moving along a direction, along which the mounting hole 1101 is opened, and on the other hand can adjust a distance between the free end 1202 and the fitting end 1201 by a way of expansion and retraction deformation, and in turn can have a higher flexibility of movement, which facilitates adjustments of the positions of the fitting end 1201 and the free end 1202 during use. The fitting end 1201 is configured to open or close an end of the mounting hole 1101, that is, the fitting end 1201 can abut the lid body portion 110 and block the end of the mounting hole 1101, thereby cutting off the mounting hole 1101, or the fitting end 1201 can be separated from the lid body portion 110 and open an end of the mounting hole 1101, thereby turning on the mounting hole 1101. The free end 1202 is arranged close to another end of the mounting hole 1101 and can be configured to protrude from or retract into another other end of the mounting hole 1101. The limit portion 130 is disposed within the mounting hole 1101, and the fitting end 1201 and the free end 1202 are respectively located on two sides of the limit portion 130 along the opening direction of the mounting hole 1101, so that the distance between the free end 1202 and the fitting end 1201 of the float portion 120 can be limited based on an arrangement of the limit portion 130, thereby preventing a contact between the free end 1202 and the fitting end 1201.

In practical applications, the pot lid assembly 100 according to some embodiments of the disclosure may be provided on a pot body assembly 200 of a pressure cooking appliance or used as a component of the pressure cooking appliance. In some embodiments, the lid body portion 110 may be configured to cover a pot mouth of the pot body assembly 200 to enclose a cooking cavity with the pot body assembly 200. As shown in FIG. 2, during a pressure cooking process, a pressure in the cooking cavity can act on the float portion 120, and the float portion 120 will move along the mounting hole 1101 of the lid body portion 110 accordingly so that the fitting end 1201 of the float portion 120 contacts the lid body portion 110 and accordingly cuts off an end of the mounting hole 1101, and therefore the cooking cavity is prevented from being in communication with an external environment via the mounting hole 1101 to ensure the pressure in the cooking cavity to be stable. The free end 1202 of the float portion 120 may protrude from another end of the mounting hole 1101 to prompt a user of a state of pressure in the cooking cavity. As shown in FIG. 3, in the above situation, if the free end 1202 of the float portion 120 is subjected to an external force and generates a tendency of movement of retracting into the mounting hole 1101, the float portion 120 can use, through a way of compression deformation, its own compression deformation to offset a displacement of the free end 1202. At the same time, based on an arrangement of the limit portion 130, a too small distance between the free end 1202 and the fitting end 1201 can also be avoided, and thus the free end 1202 and the fitting end 1201 can be prevented from contacting with each other due to the compression deformation, thereby preventing a position of the fitting end 1201 from being changed, avoiding the mounting hole 1101 from being turned on during a pressure cooking process, being conducive to reducing a probability of a high-temperature medium in the cooking cavity released to the outside via the mounting hole 1101 while a stability of an internal pressure of the cooking cavity is ensured, and in turn reducing a risk of scalding users, and therefore improving a safety of the pressure cooking process. Therefore it is conducive to improving a user experience for a product.

It can be understood that the high-temperature medium may be, but is not limited to, a high-temperature gas, a steam, a high-temperature liquid and so on.

It should be noted that in the traditional technology, a float of a pressure cooking appliance usually has a rigid structure. Therefore, in a case that a cooking cavity is pressurized and an end of the float is forced to close the mounting hole, if an end of the float protruding from the cooking cavity is subjected to an external force and generates a tendency of movement of retracting into the mounting hole, the float as a whole will be caconfigured to move along the mounting hole to make the mounting hole to switch from a cut-off state to a turned-on state, thereby causing a pressure relief of the cooking cavity and a releasing of the high-temperature medium into the external environment via the mounting hole. If the external force is applied manually by a user, it is extremely easy to scald the user and a safety in the pressure cooking process is affected. Compared with the traditional technology, the pot lid assembly 100 according to the embodiments of the disclosure, based on the above arrangement, can utilize expansion and retraction deformation abilities of the float portion 120 to offset the displacement of the free end 1202 and prevent the free end 1202 and the fitting end 1201 from contacting with each other due to compression deformation, thereby preventing the mounting hole 1101 from being turned on due to a change in a position of the fitting end 1201, being conducive to reducing the probability of the high-temperature medium in the cooking cavity released to the outside via the mounting hole 1101 while a stability of an internal pressure of the cooking cavity is ensured, and in turn reducing the risk of scalding user, and therefore improving the safety of the pressure cooking process, and therefore it is conducive to improving the user experience for the product.

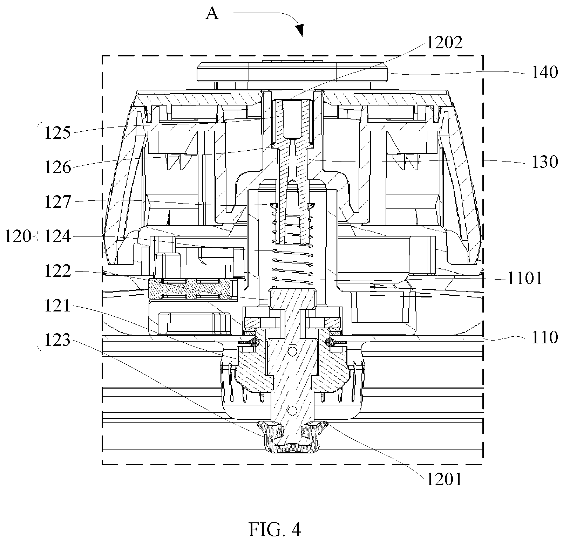

It can be understood that, as shown in FIG. 2 to FIG. 4, the pot lid assembly 100 according to the embodiments of the disclosure is based on the above arrangement, and the float portion 120 may have, but be not limited to, a first working state, a second working state, and a third working state. In some embodiments, as shown in FIG. 2, in a case that the float portion 120 is in the first working state, the fitting end 1201 abuts against the lid body portion 110 to close an end of the mounting hole 1101, and the free end 1202 protrudes from another end of the mounting hole 1101. As shown in FIG. 3, in a case that the float portion 120 is in the second working state, the fitting end 1201 abuts against the lid body portion 110 to close the end of the mounting hole 1101, and the free end 1202 retracts into the another end of the mounting hole 1101. As shown in FIG. 4, in a case that the float portion 120 is in the third working state, the fitting end 1201 is separated from the lid body portion 110 to turn on the mounting hole 1101, and the free end 1202 retracts into the another end of the mounting hole 1101. The various working states can be switched from one another by adjusting the position of the float portion 120 along the opening direction of the mounting hole 1101 or stress conditions of two ends of the float portion 120.

As shown in FIG. 1 to FIG. 5, the pot lid assembly 100 according to the embodiments of the disclosure applied to a pressure cooking appliance is taken as an example, and the mounting hole 1101 may be opened along a thickness direction of the lid body portion 110, so that in a case that the lid body portion 110 covers on the pot mouth, the opening direction of the mounting hole 1101 and an extending direction of the float portion 120 both can maintain a high consistency with the direction of gravity. In some embodiments, the free end 1202 may be arranged close to an outer end of the mounting hole 1101, and the fitting end 1201 may be arranged close to an inner end of the mounting hole 1101. It can be understood that the outer end of the mounting hole 1101 is an end of the mounting hole 1101 away from the cooking cavity in a case that the lid body portion 110 covers the pot mouth, and the inner end of the mounting hole 1101 is an end of the mounting hole 1101 close to the cooking cavity in a case that the lid body portion 110 covers the pot mouth. Therefore, based on the above arrangement, the float portion 120 can have displacements of rising and falling under a pressure difference between the cooking cavity and the external environment, which in turn facilitates the fitting end 1201 to perform a control of turning on-cutting off of the inner end of the mounting hole 1101, and facilitates the free end 1202 to protrude from or retract into the outer end of the mounting hole 1101 to reflect a pressure condition in the cooking cavity. Correspondingly, during the pressure cooking process, the float portion 120 may be in the third working state before the pressure in the cooking cavity is pressurized. In a case that the pressure in the cooking cavity rises to a level of pressure under which ssthe float portion 120 can be caconfigured to overcome a resistance and generate an upward movement, the float portion 120 can switch from the third working state to the first working state, and can use the free end 1202 to prompt the user about a status of the pressure in the cooking cavity. In a case that the float portion 120 is in the first working state, such as the free end 1202 is subjected to an external force and generates a tendency of movement of retracting into the outer end of the mounting hole 1101, the float portion 120 can use, through a way of compression deformation, its own compression deformation to offset the displacement of the free end 1202, and switch from the first working state to the second working state, thereby preventing the position of the fitting end 1201 from being changed and avoiding the mounting hole 1101 from being turned on in a case that a pressure in the cooking cavity is high.

It can be understood that the float portion 120 may be of an elastic stretchable structure or a non-elastic stretchable structure. In some embodiments, in a case that the float portion 120 is of the elastic stretchable structure, the float portion 120 may have good deformation and recovery capability, thereby being conducive to improving a performance of convenience of switching among working states of the float portion 120, and facilitating a reuse of the float portion 120. For example, in a case that the float portion 120 is in the second working state, if the external force endured by the free end 1202 is removed, the float portion 120 can return to the first working state. In a case that the float portion 120 is of the non-elastic stretchable structure, for example, in a case that the float portion 120 may be of a flexible stretchable structure or a non-elastic mechanical stretchable mechanism such as a stretchable rod, the float portion 120 can have a lower resistance of expansion and retraction deformation, which is conducive to further reducing a force endured by the fitting end 1201 during a process of protruding and retracting, thereby further ensuring a positional stability of the fitting end 1201 during the float portion 120 switches from the first working state to the second working state.

As shown in FIG. 1 to FIG. 4, in some feasible examples, the limit portion 130 and the lid body portion 110 are of an integrated structure, thereby improving a connection strength between the limit portion 130 and the lid body portion 110.

As shown in FIG. 3, in some examples, a minimum distance between a side of the limit portion 130 facing toward the free end 1202 and the fitting end 1201 is a first distance L1. The float portion 120 is provided with a first positioning member 126. The first positioning member 126 is configured to abut the side of the limit portion 130 facing toward the free end 1202. In a case that the float portion 120 is in an extreme compression state, a distance between the first positioning member 126 and the fitting end 1201 is a second distance. The first distance L1 is greater than the second distance.

In some technical solutions, the float portion 120 may be provided with a first positioning member 126, and the first distance L1 may be set to be greater than the second distance. It can be understood that during use, the float portion 120 can generate a displacement or a stretchable amount along the opening direction of the mounting hole 1101. During a process of moving or expansion and retraction, the fitting end 1201 may approach to or be away from the lid body portion 110 and the limit portion 130. As shown in FIG. 2 and FIG. 3, the fitting end 1201, in a case abutting against the lid body portion 110 and cutting off an end of the mounting hole 1101, is in a position closest to the limit portion 130, and correspondingly, in a case that the fitting end 1201 is in the position, the distance between the side of the limit portion 130 facing toward the free end 1202 and the fitting end 1201 is the first distance. At the same time, since the float portion 120 is of the stretchable structure, the float portion 120 will have a corresponding stretchable limit, and the extreme compression state refers to a state in which a length of the float portion 120 in a stretchable direction is the smallest in a case that the float portion 120 is not limited by an amount of compression externally applied and does not have a failure phenomenon.

Therefore, based on the arrangement of this technical solution, on one aspect, the float portion 120 can use the first positioning member 126 during a movement to cooperate with the limit portion 130 to restrict a movement stroke of the free end 1202, and in turn limit the distance between the fitting end 1201 and the free end 1202, thereby avoiding a contact between the fitting end 1201 and the free end 1202, and reducing a risk of a displacement of the fitting end 1201 in a case that the pressure in the cooking cavity is high. On another aspect, based on a relationship of size between the first distance L1 and the second distance, a stretchable range of the float portion 120 in practical applications can be further constrained and restricted. During use, the float portion 120 can be avoided from reaching the extreme compression state, and the float portion 120 can maintain a certain margin in a compression performance, and therefore a stiffness of the float portion 120 during use is reduced, and in turn if the free end 1202 is subjected to the external force and generates a tendency of movement of retracting into the mounting hole 1101, the float portion 120 can more reliably use its own compression deformation to offset the displacement of the free end 1202 and weaken an influence of the external force on the fitting end 1201, and therefore a further reliable guarantee is provided for stabilizing the position of the fitting end 1201 during the pressure cooking process. On a further aspect, in a case that the pressure in the cooking cavity is high, such as in a case that the free end 1202 is subjected to the external force and generates a displacement of retracting into the mounting hole 1101, the first positioning member 126 can abut the limit portion 130 when an amount of the displacement reaches a certain degree, and in turn a supporting function of the limit portion 130 can be configured to offset the external force. Thus the external force is further prevented from being transmitted to the fitting end 1201 through the structure of the float portion 120, which is conducive to further ensuring a cutting-off effect of the fitting end 1201 on the mounting hole 1101, reducing the risk that the mounting hole 1101 is turned on during the pressure cooking process. Therefore, the safety of the pressure cooking process is improved.

As shown in FIG. 2 to FIG. 5, according to the invention, the float portion 120 includes: a base seat 121, which is disposed on the lid body portion 110 and located at an end of the mounting hole 1101, and is opened with a fitting hole which is in communication with the mounting hole 1101; a float body 122, penetrating and movably arranged in the fitting hole; a sealing member 123, which is sleeved on an end of the float body 122 and configured to cover or open the fitting hole; and an elastic stretchable member 124, which is connected to another end of the float body 122, and penetrates and is movably arranged in the mounting hole 1101. In some embodiments, the fitting end 1201 is formed on the sealing member 123, and the free end 1202 is located at an end of the elastic stretchable member 124 away from the float body 122.

According to the invention, the float portion 120 includes a base seat 121, a float body 122, a sealing member 123 and an elastic stretchable member 124. The base seat 121 is disposed on the lid body portion 110 and is located at an end of the mounting hole 1101, and the base seat 121 is opened with a fitting hole being in communication with the mounting hole 1101, so that the base seat 121 can partially cover a corresponding end of the mounting hole 1101. The float body 122 penetrates through the fitting hole and can move relative to the fitting hole, so that the float body 122 can generate, through a way of moving relative to the fitting hole, a displacement along the opening direction of the mounting hole 1101. The sealing member 123 is sleeved on an end of the float body 122 and has the fitting end 1201, so that the sealing member 123 can moves synchronously with an movement of the float body 122 and cover or open the fitting hole, and in turn a control of turning on-cutting off state of an end of the mounting hole 1101 is realized by switching opening and closing states of the fitting hole, and a leakproofness of the fitting hole can be guaranteed in a case that the fitting hole is covered. A risk of leakage of the high-temperature media in the cooking cavity is further reduced and a more reliable guarantee is provided for a pressure stability of the cooking cavity.

The elastic stretchable member 124 is connected to an end of the float body 122 away from the sealing member 123, and penetrates and is movably arranged into the mounting hole 1101. The free end 1202 is located at the end of the elastic stretchable member 124 away from the float body 122, so that in practical applications, the float portion 120 can achieve a expansion and retraction deformation based on the arrangement of the elastic stretchable component 124, and in turn when the free end 1202 is subjected to the external force and generates the tendency of movement of retracting into the mounting hole 1101, the float portion 120 can offset a displacement of the free end 1202 by a way of compression deformation to prevent a synchronous movement of the fitting end 1201. At the same time, the elastic stretchable member 124 can store an energy during a compression process to absorb the external force, thus it is conducive to further reducing the force endured by the fitting end 1201 and a reliable guarantee is provided for stabilizing the position of the fitting end 1201. The elastic stretchable member 124 can release the energy and resume the deformation after the external force is removed, so that the free end 1202 can protrude from the mounting hole 1101, thereby facilitating prompting the user of the state of pressure in the cooking cavity during the pressure cooking process, and thus it is beneficial to improving the user experience of the product.

It can be understood that the free end 1202 is located at an end of the elastic stretchable member 124 away from the float body 122, in other words, the end of the elastic stretchable member 124 away from the float body 122 is the free end 1202, or the end of the elastic stretchable member 124 away from the float body 122 may be provided with another component having the float portion 120, the free end 1202 being formed on the another components.

In some examples, along the opening direction of the mounting hole 1101, two ends of the elastic stretchable member 124 are respectively located on two sides of the limit portion 130. The limit portion 130 is configured to limit a distance between the two ends of the elastic stretchable member 124.

In some technical solutions, along the opening direction of the mounting hole 1101, the two ends of the elastic stretchable member 124 are respectively located on the two sides of the limit portion 130, and an end of the elastic stretchable member 124 away from the float body 122 is the free end 1202. Correspondingly, the limit portion 130 can limit the distance between the free end 1202 and the fitting end 1201 by limiting the distance between the two ends of the elastic stretchable member 124, so that based on the above arrangement, a length of the elastic stretchable member 124 along the opening direction of the mounting hole 1101 can be increased, and therefore a proportion of the length of the elastic stretchable member 124 in the extending direction of the float portion 120 can be increased, thereby improving a stretchable performance of the float portion 120. It is conducive to further reducing a structural rigidity of the float portion 120, and further improving, in practical applications, abilities of the float portion 120 to offset the displacement of the free end 1202 and absorb external forces, and therefore a further guarantee is provided for stabilizing the position of the fitting end 1201.

It can be understood that in some technical solutions, the first positioning member 126 may be provided on the elastic stretchable member 124.

As shown in FIG. 2 to FIG. 4, in some examples, the float portion 120 further includes: a float ejector rod 125, which is connected to the elastic stretchable member 124, and is formed with a free end 1202; and a first positioning member 126, which is disposed on the float ejector rod 125, and is configured to abut the side of the limit portion 130 facing toward the free end 1202. In some embodiments, in a case that the first positioning member 126 abuts against the side of the limit portion 130 facing toward the free end 1202, a gap is formed between the float ejector rod 125 and the float body 122.

In some technical solutions, the float portion 120 may also include the float ejector rod 125 and the first positioning member 126. In some embodiments the float ejector rod 125 is connected to the elastic stretchable member 124 and is formed with the free end 1202. The first positioning member 126 is disposed on the float ejector rod 125. It can be understood that the float ejector rod 125 may have, compared with the elastic stretchable member 124, a rigid structure, that is, an elasticity of the float ejector rod 125 is smaller and lower than the elastic stretchable member 124, and therefore the float ejector rod 125 is not easily deformed under an action of the external force and has good structural stability and reliability, and in turn in practical applications, a probability of structural damage of the float portion 120 can be reduced and a service life of the float portion 120 can be extended. The float ejector rod 125 can provide a good support condition for the first positioning member 126, which is conducive to maintaining a stable posture of the first positioning member 126, thereby ensuring a reliable cooperation between the first positioning member 126 and the limit portion 130. At the same time, in a case that the first positioning member 126 abuts against the side of the limit portion 130 facing toward the free end 1202, the gap may be formed between the float ejector rod 125 and the float body 122, so that in a case that the distance between the free end 1202 and the fitting end 1201 is small, a rigid contact between the float ejector 125 and the float body 122 can be avoided, which is conducive to further ensuring the positional stability of the fitting end 1201 during the pressure cooking process, thereby increasing the pressure in the cooking cavity. In a case that the pressure in the cooking cavity is high, the mounting hole 1101 can be further prevented from being turned on, which is beneficial to ensuring safety and stability of the pressure cooking process.

In some feasible examples, the first positioning member 126 and the float ejector rod 125 may be of an integrated structure, thereby improving a connection strength between the first positioning member 126 and the float ejector rod 125.

As shown in FIG. 2 to FIG. 4, in some examples, the float portion 120 further includes: a second positioning portion 127, which is disposed on the float ejector rod 125, and is configured to abut a side of the limit portion 130 facing toward the fitting end 1201. The elastic stretchable member 124 is located between the second positioning member 127 and the float body 122. In some embodiments, along the opening direction of the mounting hole 1101, a distance between the first positioning member 126 and the second positioning member 127 is greater than a distance between two sides of the limit portion 130.

In some technical solutions, the float portion 120 may also include a second positioning member 127 disposed on the float ejector rod 125. Along the opening direction of the mounting hole 1101, the first positioning member 126 and the second positioning member 127 are respectively located at the two sides of the limit portion 130, and the second positioning member 127 is configured to abut the side of the limit portion 130 facing toward the fitting end 1201. Correspondingly, the elastic stretchable member 124 may be disposed between the second positioning member 127 and the float body 122, and the distance between the first positioning member 126 and the second positioning member 127 is set to be greater than the distance between the two sides of the limit portion 130. Therefore, based on the above arrangement, on the one hand, the float portion 120 can further utilize a fitting relationship between the second positioning member 127 and the limit portion 130 to constrain a maximum distance between the free end 1202 and the fitting end 1201, and in turn an excessive protrusion amount of the float ejector rod 125 can be avoided during use, which is conductive to further reducing a probability of the float ejector rod 125 being accidentally touched. On the other hand, the second positioning member 127 can cooperate with the float body 122 to further constrain and restrict the stretchable range of the elastic stretchable member 124 during use, which is beneficial to improving the stability and reliability of the elastic stretchable member 124 during a process of protruding and retracting and reducing a probability of the elastic stretchable member 124 getting stuck during the process of protruding and retracting, and therefore a more reliable guarantee is provided for a functioning of a stretchable performance of the float portion 120.

As shown in FIG. 2, it can be understood that by a way of setting the distance between the first positioning member 126 and the second positioning member 127 along the opening direction of the mounting hole 1101 to be greater than the distance between two sides of the limit portion 130, the float ejector rod 125 can be allowed to have a moving range as shown by a dimension line L2 in the opening direction of the mounting hole 1101, thereby ensuring a mobility of the free end 1202 and a stretchable capability of the float portion 120. Correspondingly, in order to ensure that the gap is formed between the float ejector rod 125 and the float body 122 in a case that the first positioning member 126 abuts against the side of the limit portion 130 facing toward the free end 1202, a distance L3 between an end of the float ejector rod 125 close to the float body 122 and the float body 122 can, in a case that the float portion 120 is in the first working state, be set to be greater than the moving range L2.

In some feasible examples, the second positioning member 127 and the float ejector rod 125 may be of an integrated structure, thereby improving a connection strength between the second positioning member 127 and the float ejector rod 125.

As shown in FIG. 2 to FIG. 4, in some examples, an end of the float ejector rod 125 close to the float body 122 penetrates and is arranged in the elastic stretchable member 124.

In some technical solutions, an end of the float ejector rod 125 close to the float body 122 may be penetrated in the elastic stretchable member 124, so that based on the above arrangement, a portion of the float ejector rod 125 penetrating in the elastic stretchable member 124 can further constrain a posture of the elastic stretchable member 124 during a process of expansion and retraction deformation, and can further reduce the probability of the elastic stretchable member 124 getting stuck during use, which is conducive to providing further guarantee for smooth and stable processes of protruding and retracting of the float portion 120.

In some examples, a stiffness coefficient of the elastic stretchable member 124 satisfies:

$$k \leq \frac{p_{min} \cdot A \cdot G_0 \cdot G_1 \cdot G_2}{x_{max}} \qquad (1)$$

In the above formula (1), k is a stiffness coefficient of the elastic stretchable member 124; $p_{min}$ is a minimum working pressure of the pressure cooking appliance; A is an area of orthographic projection of the sealing member 123 on a projection plane perpendicular to the direction of gravity; $G_0$ is a weight of the elastic stretchable member 124; $G_1$ is a weight of the float body 122; $G_2$ is a weight of the sealing member 123; and $x_{max}$ is a maximum amount of expansion and retraction of the elastic stretchable member 124.

In some technical solutions, in a case that the pot lid assembly 100 is applied to the pressure cooking appliance, the stiffness coefficient of the elastic stretchable member 124 may be set to satisfy the above formula (1), and therefore a too large stiffness coefficient of the elastic stretchable member 124 is avoided, which is beneficial to preventing the elastic stretchable member 124 from generating an excessive elastic force when compressed, and in turn an elastic force exerted by the elastic stretchable member 124 on the float body 122 can be reduced. Thus the float body 122 and the sealing member 123 are prevented from overcoming a pressure in the cooking cavity to displace under an action of the elastic force, which is beneficial to ensuring a cutting-off effect of the fitting end 1201 on the mounting hole 1101, and a stability of the pressure in the cooking cavity is further ensured, and a risk of overflowing of the high-temperature medium in the cooking cavity is reduced.

It can be understood that the pressure cooking appliance usually has a rated working pressure range, and the minimum working pressure is also a minimum pressure of the cooking cavity of the pressure cooking appliance when a pressure cooking is performed. In combination with the description, in a case that the pot lid assembly 100 is applied to the pressure cooking appliance, the mounting hole 1101 can be opened along the thickness direction of the lid body portion 110, so that when the lid body portion 110 and the pot body assembly 200 enclose the cooking cavity, the extending direction of the float portion 120 can have a high consistency with the direction of gravity. Therefore, based on a way of arrangement of the sealing member 123, a product of the pressure in the cooking cavity with the area of orthographic projection A of the sealing member 123 on the projection plane perpendicular to the direction of gravity can characterize an acting force exerted by an air pressure in the cooking cavity on the float portion 120 in the direction of gravity.

As shown in FIG. 2 to FIG. 4, in some examples, the elastic stretchable member 124 is made of silicone; or the elastic stretchable member 124 is a spring or an elastic piece.

In some technical solutions, the elastic stretchable member 124 may be made of silicone, so that the elastic stretchable member 124 can have a good deformation ability of expansion and retraction and at the same time have a good moldability, which is beneficial to configuring a structural shape of the elastic stretchable member 124 according to actual needs during the production of the lid assembly, thereby facilitating a formation of a stable and reliable fitting relationship between the elastic stretchable member 124 and the mounting hole 1101, and improving the stability of the float portion 120 during a process of protruding and retracting.

In other embodiments, the elastic stretchable member 124 may be a spring, so that the elastic stretchable member 124 can have the good deformation ability of expansion and retraction and at the same time have a good replaceability, which is beneficial to reducing costs of using, repairing and maintenance of the pot lid assembly 100.

In further embodiments, the elastic stretchable member 124 may be an elastic piece, so that the elastic stretchable member 124 can have the good deformation ability of expansion and retraction and at the same time have a good replaceability, which is beneficial to reducing costs of using, repairing and maintenance of the pot lid assembly 100.

As shown in FIG. 1 to FIG. 5, in some examples, the pot lid assembly 100 further includes: a handle portion 140 disposed on the lid body portion 110.

In some technical solutions, the pot lid assembly 100 may also include a handle portion 140 disposed on the lid body portion 110, so that it can facilitate a user to operate the pot lid assembly in practical applications, and it is conducive to further improving a convenience of use of the pot lid assembly 100.

It can be understood that the fitting ends of the handle portion 140 and the float portion 120 may be located on two sides of the lid body portion 110, respectively.

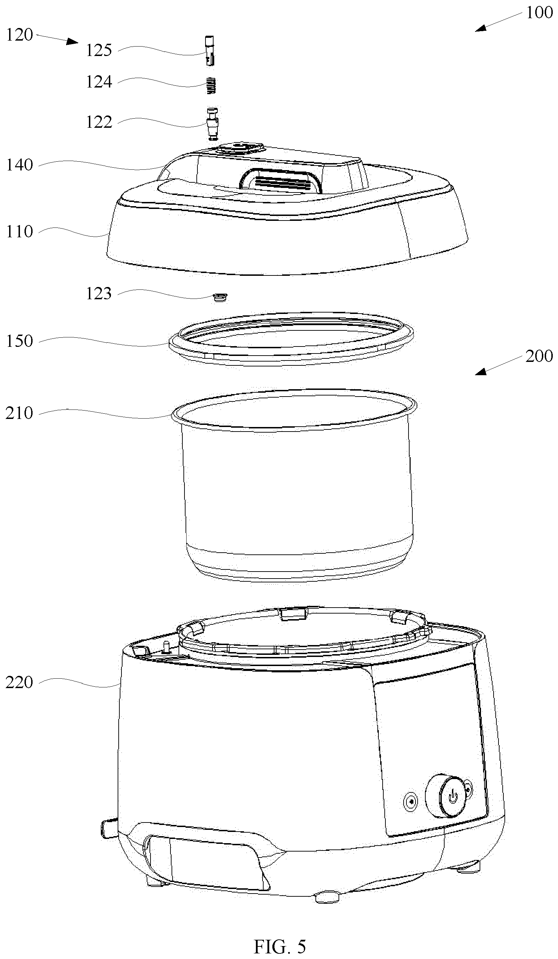

As shown in FIG. 5, in some feasible examples, the pot lid assembly 100 may also include a sealing portion 150 disposed on the lid body portion 110. In a case that the lid body portion 110 covers the pot mouth, the sealing portion 150 is located between the pot body assembly 200 and the lid body portion 110, and therefore the pot lid assembly 100 can further use the sealing portion 150 to block a gap between the lid body portion 110 and the pot mouth for providing further reliable guarantee for smooth and stable processes of the pressure cooking.

As shown in FIG. 5, a pressure cooking appliance is proposed according to a second aspect of embodiments of the disclosure, which includes: a pot body assembly 200 formed with a pot mouth; and a pot lid assembly 100, as proposed in any one of the first aspects, configured to open or cover the pot mouth.

The pressure cooking appliance according to some embodiments of the disclosure includes a pot body assembly 200 and a pot lid assembly 100 as proposed in any one of the first aspects. The lid body portion 110 may be configured to cover a pot mouth of the pot body assembly 200 to enclose a cooking cavity with the pot body assembly 200. As shown in FIG. 2, during a pressure cooking process, a pressure in the cooking cavity can act on the float portion 120, and the float portion 120 will move along the mounting hole 1101 of the lid body portion 110 accordingly so that the fitting end 1201 of the float portion 120 contacts the lid body portion 110 and accordingly cuts off an end of the mounting hole 1101, and therefore the cooking cavity is prevented from being in communication with an external environment via the mounting hole 1101 to ensure a stable pressure in the cooking cavity, and the free end 1202 of the float portion 120 may protrude from another end of the mounting hole 1101 to prompt a user of a state of pressure in the cooking cavity. As shown in FIG. 3, in the above situation, if the free end 1202 of the float portion 120 is subjected to an external force and generates a tendency of movement of retracting into the mounting hole 1101, the float portion 120 can use, through a way of compression deformation, its own compression deformation to offset a displacement of the free end 1202. At the same time, based on an arrangement of the limit portion 130, a too small distance between the free end 1202 and the fitting end 1201 can also be avoided, and the free end 1202 and the fitting end 1201 can be prevented from contacting with each other due to the compression deformation, thereby preventing a position of the fitting end 1201 from being changed, avoiding the mounting hole 1101 from being turned on during a pressure cooking process, and being conducive to reducing a probability of a high-temperature medium in the cooking cavity released to the outside through the mounting hole 1101 while a stability of an internal pressure of the cooking cavity is ensured, and in turn reducing a risk of scalding user, and therefore improving the safety of the pressure cooking process. Therefore, it is conducive to improving a user experience for the product.

It can be understood that the high-temperature medium may be but is not limited to, a high-temperature gas, a steam, a high-temperature liquid, and so on.

As shown in FIG. 5, in some feasible examples, the pot body assembly 200 may include a first pot body 210 and a second pot body 220. In some embodiments, the first pot body 210 is formed with the pot mouth; the second pot body 220 is formed with a housing groove; and the first pot body 210 is disposed in the housing groove. That is to say, in practical applications, the first pot body 210 and the lid body portion 110 can enclose a cooking cavity configured to accommodate ingredients to be cooked. The second pot body 220 can be used as an outer pot to provide the structural protection for the first pot body 210 and improve aesthetics of the pressure cooking appliance.

In the disclosure, the terms "first", "second" and "third" are used for descriptive purposes only and shall not be understood as indicating or implying relative importance; the term "a plurality of " refers to two or more than two, unless otherwise expressly limited. The terms "mounting", "connected to", "connection" and "fixing" should be understood in a broad sense. For example, "connection" may be a fixed connection, a detachable connection, or an integral connection; "connected to" may be either directly connected or indirectly connected through an intermediary. For those skilled in the art, the specific meanings of the above terms in the disclosure can be understood according to specific circumstances.

In the description of the disclosure, it should be understood that the orientation or positional relationship indicated by the terms "upper", "lower", "left", "right", "front", "back"and so on are orientational or positional relationships based on the orientational or positional relationships shown in the accompanying drawings and are only for the convenience of describing the disclosure and simplifying the description, but do not indicate or imply that a device or a unit referred to must have a specific direction, be constructed and operated in a specific orientation.

In the description of this specification, the terms "an embodiment", "some embodiments", "specific embodiments" and so on mean that a specific feature, structure, material, or characteristic described in connection with the embodiment or example is included in at least one embodiment or example of the disclosure. In this specification, schematic representations of the above terms do not necessarily refer to the same embodiment or example. Furthermore, the specific features, structures, materials or characteristics described may be combined in any suitable manner in any one or more embodiments or examples within the scope of the present invention, as defined in the appended claims.

The above are only preferred embodiments of the disclosure and are not intended to limit the disclosure. For those skilled in the art, the disclosure may have various modifications and changes. Any modifications, equivalent substitutions, improvements and so on made within the concept and principles of the disclosure shall be included in the protection scope of the invention, which is defined by the appended claims.

## Claims

1. A pot lid assembly (100), comprising:

   a lid body portion (110), used to cover or open a pot mouth, wherein the lid body portion (110) is provided with a mounting hole (1101);
   a float portion (120), penetrating and movably arranged in the mounting hole (1101), and having a fitting end (1201) and a free end (1202), the fitting end (1201) being configured to open or close an end of the mounting hole (1101), the free end (1202) being arranged close to another end of the mounting hole (1101), the float portion (120) having a stretchable structure such that a distance between the free end (1202) and the fitting end (1201) is adjustable; and
   a limit portion (130) disposed in the mounting hole (1101), wherein the fitting end (1201) and the free end (1202) are respectively located on two sides of the limit portion (130) along a direction, along which the mounting hole (1101) is opened, and wherein the limit portion (130) is used to limit the distance between the free end (1202) and the fitting end (1201),
   **characterized in that**
   the float portion (120) comprises:

      a base seat (121), disposed on the lid body portion (110) and located at an end of the mounting hole (1101), wherein the base seat (121) is provided with a fitting hole which is in communication with the mounting hole (1101)
      a float body (122) penetrating and movably arranged in the fitting hole;

a sealing member (123), sleeved on an end of the float body (122) and configured to cover or open the fitting hole; and

an elastic stretchable member (124), connected to another end of the float body (122) and penetrating and movably arranged in the mounting hole (1101);

wherein, the fitting end (1201) is formed on the sealing member (123), and the free end (1202) is located at an end of the elastic stretchable member (124) away from the float body (122).

2. The pot lid assembly (100) according to claim 1, wherein,

a minimum distance between a side of the limit portion (130) facing toward the free end (1202) and the fitting end (1201) is a first distance; the float portion (120) is provided with a first positioning member (126), the first positioning member (126) being configured to abut the side of the limit portion (130) facing toward the free end (1202); and

in a case that the float portion (120) is in an extreme compression state, a distance between the first positioning member (126) and the fitting end (1201) is a second distance, the first distance being greater than the second distance.

3. The pot lid assembly (100) according to claim 1, wherein,
two ends of the elastic stretchable member (124) are respectively located on two sides of the limit portion (130) along the opening direction of the mounting hole (1101), the limit portion (130) being configured to limit a distance between the two ends of the elastic stretchable member (124).

4. The pot lid assembly (100) according to claim 1, wherein the float portion (120) further comprises:

a float ejector rod (125), connected to the elastic stretchable member (124), wherein the float ejector rod (125) is provided with the free end (1202); and

a first positioning member (126), disposed on the float ejector rod (125) and configured to abut the side of the limit portion (130) facing toward the free end (1202);

wherein, in a case that the first positioning member (126) abuts the side of the limit portion (130) facing toward the free end (1202), a gap is formed between the float ejector rod (125) and the float body (122).

5. The pot lid assembly (100) according to claim 4, wherein the float portion (120) further comprises:

a second positioning portion, disposed on the float ejector rod (125) and configured to abut a side of the limit portion (130) facing toward the fitting end (1201), the elastic stretchable member (124) being located between the second positioning member (127) and the float body (122);

wherein, along the opening direction of the mounting hole (1101), a distance between the first positioning member (126) and the second positioning member (127) is greater than a distance between the two sides of the limit portion (130).

6. The pot lid assembly (100) according to claim 4, wherein,
an end of the float ejector rod (125) close to the float body (122) penetrates and is arranged in the elastic stretchable member (124).

7. The pot lid assembly (100) according to any one of claims 1, 3 to 6, wherein a stiffness coefficient of the elastic stretchable member (124) satisfies:

$$k \leq \frac{p_{min} \cdot A - G_0 - G_1 - G_2}{x_{max}}$$

where, k is the stiffness coefficient of the elastic stretchable member (124); $p_{min}$ is a minimum working pressure of a pressure cooking appliance; A is an area of orthographic projection of the sealing member (123) on a projection plane perpendicular to a direction of gravity; $G_0$ is a weight of the elastic stretchable member (124); $G_1$ is a weight of the float body (122); $G_2$ is a weight of the sealing member (123); and $x_{max}$ is a maximum amount of expansion and retraction of the elastic stretchable member (124).

8. The pot lid assembly (100) according to any one of claims 1, 3 to 6, wherein,

the elastic stretchable member (124) is made of silicone; or
the elastic stretchable member (124) is a spring or an elastic piece.

9. The pot lid assembly (100) according to any one of claims 1 to 6, further comprising:
a handle portion (140) disposed on the lid body portion (110).

10. A pressure cooking appliance, comprising:

a pot body assembly (200) provided with a pot mouth; and

the pot lid assembly (100) according to any one of claims 1 to 9, configured to open or cover the pot mouth.

## Patentansprüche

1. Topfdeckelanordnung (100), umfassend:

einen Deckelkörperbereich (110), der zum Abdecken oder Öffnen einer Topföffnung dient, wobei der Deckelkörperbereich (110) mit einem Befestigungsloch (1101) versehen ist;
einen Schwimmerbereich (120), der in das Befestigungsloch (1101) hineinragt und darin beweglich angeordnet ist und ein Passende (1201) und ein freies Ende (1202) aufweist, wobei das Passende (1201) so konfiguriert ist, dass es ein Ende des Befestigungslochs (1101) öffnet oder schließt, wobei das freie Ende (1202) nahe einem anderen Ende des Befestigungslochs (1101) angeordnet ist, wobei der Schwimmerbereich (120) eine dehnbare Struktur aufweist, so dass ein Abstand zwischen dem freien Ende (1202) und dem Passende (1201) einstellbar ist; und
sich ein Begrenzungsbereich (130) in dem Befestigungsloch (1101) befindet, wobei das Passende (1201) und das freie Ende (1202) jeweils auf zwei Seiten des Begrenzungsbereichs (130) entlang einer Richtung angeordnet sind, entlang der das Befestigungsloch (1101) geöffnet ist, und wobei der Begrenzungsbereich (130) dazu dient, den Abstand zwischen dem freien Ende (1202) und dem Passende (1201) zu begrenzen,
**dadurch gekennzeichnet, dass**
der Schwimmerbereich (120) Folgendes umfasst:

einen Basissitz (121), der sich auf dem Deckelkörperbereich (110) befindet und an einem Ende des Befestigungslochs (1101) positioniert ist, wobei der Basissitz (121) mit einem Passloch versehen ist, das mit dem Befestigungsloch (1101) in Verbindung steht
einen Schwimmerkörper (122), der in die Passöffnung eindringt und beweglich darin angeordnet ist;
ein Dichtungselement (123), das auf ein Ende des Schwimmerkörpers (122) aufgesteckt und so ausgebildet ist, dass es die Passöffnung abdeckt oder öffnet; und
ein elastisches, dehnbares Element (124), das mit einem anderen Ende des Schwimmerkörpers (122) verbunden ist und in das Befestigungsloch (1101) eindringt und darin beweglich angeordnet ist;

wobei das Passende (1201) an dem Dichtungselement (123) ausgebildet ist und sich das freie Ende (1202) an einem Ende des elastischen, dehnbaren Elements (124)

2. Topfdeckelanordnung (100) gemäß Anspruch 1, wobei

ein Mindestabstand zwischen einer Seite des Begrenzungsbereichs (130), die dem freien Ende (1202) zugewandt ist, und dem Passende (1201) ein erster Abstand ist;
der Schwimmerbereich (120) mit einem ersten Positionierungselement (126) versehen ist, wobei das erste Positionierungselement (126) so konfiguriert ist, dass es an der Seite des Begrenzungsbereichs (130) anliegt, die dem freien Ende (1202) zugewandt ist; und
in einem Fall, in dem sich der Schwimmerbereich (120) in einem extremen Kompressionszustand befindet, ein Abstand zwischen dem ersten Positionierungselement (126) und dem Passende (1201) ein zweiter Abstand ist, wobei der erste Abstand größer ist als der zweite Abstand.

3. Topfdeckelanordnung (100) gemäß Anspruch 1, wobei
zwei Enden des elastischen, dehnbaren Elements (124) jeweils an zwei Seiten des Begrenzungsbereichs (130) entlang der Öffnungsrichtung des Befestigungslochs (1101) angeordnet sind, wobei der Begrenzungsbereich (130) so konfiguriert ist, dass er einen Abstand zwischen den zwei Enden des elastischen, dehnbaren Elements (124) begrenzt.

4. Topfdeckelanordnung (100) gemäß Anspruch 1, wobei der Schwimmkörperbereich (120) ferner Folgendes umfasst:

einen Schwimmerausstoßstab (125), der mit dem elastischen, dehnbaren Element (124) verbunden ist, wobei der Schwimmerausstoßstab (125) mit dem freien Ende (1202) versehen ist; und
ein erstes Positionierungselement (126), das an dem Schwimmerausstoßstab (125) angeordnet und so konfiguriert ist, dass es an der Seite des Begrenzungsbereichs (130) anliegt, die dem freien Ende (1202) zugewandt ist;
wobei in einem Fall, in dem das erste Positionierungselement (126) an der Seite des Begrenzungsbereichs (130) anliegt, die dem freien Ende (1202) zugewandt ist, ein Spalt zwischen dem Schwimmerausstoßstab (125) und dem Schwimmerkörper (122) ausgebildet ist.

**5.** Topfdeckelanordnung (100) gemäß Anspruch 4, wobei der Schwimmerbereich (120) ferner Folgendes umfasst:

> einen zweiten Positionierungsbereich, der sich an dem Schwimmerausstoßstab (125) befindet und so konfiguriert ist, dass er an einer Seite des Begrenzungsbereichs (130) anliegt, die dem Passende (1201) zugewandt ist, wobei das elastische dehnbare Element (124) zwischen dem zweiten Positionierungselement (127) und dem Schwimmerkörper (122) angeordnet ist;
> wobei entlang der Öffnungsrichtung des Befestigungslochs (1101) ein Abstand zwischen dem ersten Positionierungselement (126) und dem zweiten Positionierungselement (127) größer ist als ein Abstand zwischen den zwei Seiten des Begrenzungsbereichs (130).

**6.** Topfdeckelanordnung (100) gemäß Anspruch 4, wobei
ein Ende des Schwimmerausstoßstabs (125) in der Nähe des Schwimmerkörpers (122) in das elastische, dehnbare Element (124) eindringt und darin angeordnet ist.

**7.** Topfdeckelanordnung (100) gemäß einem der Ansprüche 1, 3 bis 6, wobei ein Steifigkeitskoeffizient des elastischen, dehnbaren Elements (124) Folgendes erfüllt:

$$k \leq \frac{p_{min} \cdot A - G_0 - G_1 - G_2}{x_{max}}$$

wobei k der Steifigkeitskoeffizient des elastischen, dehnbaren Elements (124) ist; $p_{min}$ ein minimaler Arbeitsdruck eines Schnellkochgeräts ist; A eine Fläche einer orthogonalen Projektion des Dichtungselements (123) auf eine Projektionsebene senkrecht zur Schwerkraftrichtung ist; $G_0$ ein Gewicht des elastischen, dehnbaren Elements (124) ist; $G_1$ ein Gewicht des Schwimmkörpers (122) ist; $G_2$ ein Gewicht des Dichtungselements (123) ist; und $x_{max}$ ein maximaler Ausdehnungs- und Rückzugswert des elastischen, dehnbaren Elements (124) ist.

**8.** Topfdeckelanordnung (100) gemäß einem der Ansprüche 1, 3 bis 6, wobei

> das elastische, dehnbare Element (124) aus Silikon besteht; oder
> das elastische, dehnbare Element (124) eine Feder oder ein elastisches Teil ist.

**9.** Topfdeckelanordnung (100) gemäß einem der Ansprüche 1 bis 6, ferner umfassend:
einen Griffbereich (140), der sich an dem Deckelkörperbereich (110) befindet.

**10.** Schnellkochgerät, umfassend:

> eine Topfkörperanordnung (200), die mit einer Topföffnung versehen ist; und
> die Topfdeckelanordnung (100) gemäß einem der Ansprüche 1 bis 9, die so konfiguriert ist, dass sie die Topföffnung öffnet oder abdeckt.

**Revendications**

**1.** Ensemble de couvercle de casserole (100), comprenant :

> une partie de corps de couvercle (110), utilisée pour couvrir ou ouvrir une ouverture d'une casserole, dans laquelle la partie de corps de couvercle (110) est pourvue d'un trou de montage (1101) ;
> une partie flottante (120), pénétrant dans le trou de montage (1101) et disposée de manière mobile dans celui-ci, et comportant une extrémité d'ajustement (1201) et une extrémité libre (1202), l'extrémité d'ajustement (1201) étant configurée pour ouvrir ou fermer une extrémité du trou de montage (1101), l'extrémité libre (1202) étant disposée à proximité d'une autre extrémité du trou de montage (1101), la partie flottante (120) ayant une structure extensible de telle sorte qu'une distance entre l'extrémité libre (1202) et l'extrémité d'ajustement (1201) soit réglable ; et
> une partie de limitation (130) disposée dans le trou de montage (1101), dans laquelle l'extrémité d'ajustement (1201) et l'extrémité libre (1202) sont respectivement situées sur deux côtés de la partie de limitation (130) le long d'une direction, le long de laquelle le trou de montage (1101) est ouvert, et dans laquelle la partie de limitation (130) est utilisée pour limiter la distance entre l'extrémité libre (1202) et l'extrémité d'ajustement (1201),
> **caractérisé en ce que**
> la partie flottante (120) comprend :

>> un siège de base (121), disposé sur la partie de corps de couvercle (110) et situé à une extrémité du trou de montage (1101), dans lequel le siège de base (121) est muni d'un trou d'ajustement qui est en communication avec le trou de montage (1101)

un corps flottant (122) pénétrant dans le trou d'ajustement et disposé de manière mobile dans celui-ci ;

un élément d'étanchéité (123), emmanché sur une extrémité du corps flottant (122) et configuré pour recouvrir ou ouvrir le trou d'ajustement ; et

un élément élastique extensible (124), relié à une autre extrémité du corps flottant (122) et pénétrant et disposé de manière mobile dans le trou de montage (1101) ;

dans lequel l'extrémité d'ajustement (1201) est formée sur l'élément d'étanchéité (123), et l'extrémité libre (1202) est située à une extrémité de l'élément élastique extensible (124) éloignée du corps flottant (122).

2.  Ensemble de couvercle de casserole (100) selon la revendication 1, dans lequel

une distance minimale entre un côté de la partie de limitation (130) faisant face à l'extrémité libre (1202) et l'extrémité d'ajustement (1201) est une première distance ;

la partie flottante (120) est pourvue d'un premier élément de positionnement (126), le premier élément de positionnement (126) étant configuré pour venir en butée contre le côté de la partie de limitation (130) faisant face à l'extrémité libre (1202) ; et

dans un cas où la partie flottante (120) se trouve dans un état de compression extrême, une distance entre le premier élément de positionnement (126) et l'extrémité d'ajustement (1201) est une deuxième distance, la première distance étant supérieure à la deuxième distance.

3.  Ensemble de couvercle de casserole (100) selon la revendication 1, dans lequel deux extrémités de l'élément élastique extensible (124) sont respectivement situées sur deux côtés de la partie de limitation (130) le long de la direction d'ouverture du trou de montage (1101), la partie de limitation (130) étant configurée pour limiter une distance entre les deux extrémités de l'élément élastique extensible (124).

4.  Ensemble de couvercle de casserole (100) selon la revendication 1, dans lequel la partie flottante (120) comprend en outre :

une tige d'éjection de flotteur (125), reliée à l'élément élastique extensible (124), dans laquelle la tige d'éjection de flotteur (125) est pourvue d'une extrémité libre (1202) ; et

un premier élément de positionnement (126), disposé sur la tige d'éjection du flotteur (125) et configuré pour venir en butée contre le côté de la partie de limitation (130) faisant face à l'extrémité libre (1202) ;

dans lequel, dans un cas où le premier élément de positionnement (126) vient en butée contre le côté de la partie de limitation (130) faisant face à l'extrémité libre (1202), un espace est formé entre la tige d'éjection de flotteur (125) et le corps flottant (122).

5.  Ensemble de couvercle de casserole (100) selon la revendication 4, dans lequel la partie flottante (120) comprend en outre :

une deuxième partie de positionnement, disposée sur la tige d'éjection du flotteur (125) et configurée pour venir en butée contre un côté de la partie de limitation (130) faisant face à l'extrémité d'ajustement (1201), l'élément élastique extensible (124) étant situé entre le deuxième élément de positionnement (127) et le corps flottant (122) ;

dans lequel, le long de la direction d'ouverture du trou de montage (1101), une distance entre le premier élément de positionnement (126) et le deuxième élément de positionnement (127) est supérieure à une distance entre les deux côtés de la partie de limitation (130).

6.  Ensemble de couvercle de casserole (100) selon la revendication 4, dans lequel une extrémité de la tige d'éjection du flotteur (125) proche du corps flottant (122) pénètre et est disposée dans l'élément élastique extensible (124).

7.  Ensemble de couvercle de casserole (100) selon l'une quelconque des revendications 1, 3 à 6, dans lequel un coefficient de rigidité de l'élément élastique extensible (124) satisfait :

$$k \leq \frac{p_{min} \cdot A - G_0 - G_1 - G_2}{x_{max}}$$

où k est le coefficient de rigidité de l'élément élastique extensible (124) ; $p_{min}$ est une pression de service minimale d'un appareil de cuisson sous pression ; A est une aire de projection orthogonale de l'élément d'étanchéité (123) sur un plan de projection perpendiculaire à une direction de gravité ; $G_0$ est un poids de l'élément élastique extensible (124) ; $G_1$ est un poids du corps flottant (122) ; $G_2$ est un poids de l'élément d'étanchéité (123) ; et $x_{max}$ est une valeur maximale d'expansion et de rétraction de l'élément élastique extensible (124).

8.  Ensemble de couvercle de casserole (100) selon l'une quelconque des revendications 1, 3 à 6, dans lequel

> l'élément élastique extensible (124) est en silicone ; ou
> l'élément élastique extensible (124) est un ressort ou une pièce élastique.

9. Ensemble de couvercle de casserole (100) selon l'une quelconque des revendications 1 à 6, comprenant en outre :
   une partie de poignée (140) disposée sur la partie de corps de couvercle (110).

10. Appareil de cuisson sous pression, comprenant :

    > un ensemble de corps de casserole (200) muni d'une ouverture de casserole ; et
    > l'ensemble couvercle de casserole (100) selon l'une quelconque des revendications 1 à 9, configuré pour ouvrir ou couvrir l'ouverture de la casserole.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009005182 A1